# EUROPÄISCHE PATENTSCHRIFT

(11) **EP 4 299 970 B1**
(45) Veröffentlichungstag und Bekanntmachung des Hinweises auf die Patenterteilung: **22.07.2026**
(21) Anmeldenummer: 23157893.1
(22) Anmeldetag: 22.02.2023
(51) Int. Cl.: F16P 3/14

(54) **ÜBERWACHUNGSVORRICHTUNG**
MONITORING DEVICE
DISPOSITIF DE SURVEILLANCE

(30) Priorität: 27.06.2022 DE 202022103538 U
(43) Veröffentlichungstag der Anmeldung: 03.01.2024
(73) Patentinhaber: Leuze electronic GmbH + Co. KG, 73277 Owen/Teck (DE)
(72) Erfinder: Brunner, Rolf, 82223 Eichenau (DE)
(74) Vertreter: Ruckh, Rainer Gerhard

(56) Entgegenhaltungen:
- EP-A1- 3 611 422

## Beschreibung

Die Erfindung betrifft eine Überwachungsvorrichtung.

Derartige Überwachungsvorrichtungen werden insbesondere zur Gefahrenbereichsüberwachung an gefahrbringenden Anlagen eingesetzt. Ein Gefahrenbereich an einer solchen Anlage wird mit einem optischen Sensor überwacht, der allgemein als scannender Sensor derart ausgebildet ist, dass mit den Lichtstrahlen einer Sende-/Empfangseinheit dieses optischen Sensors periodisch ein Überwachungsbereich abgetastet wird. Insbesondere kann der optische Sensor als Flächendistanzsensor, das heißt scannender Distanzsensor ausgebildet sein, mit welchem Positionen von Objekten im Überwachungsbereich bestimmt werden können.

Bei bekannten Überwachungsvorrichtungen werden scannende optische Sensoren derart eingesetzt, dass mit diesen eine Objektüberwachung nicht im gesamten Überwachungsbereich, sondern nur innerhalb eines vorgegebenen Schutzfelds erfolgt. Das Schutzfeld ist als Parameter im optischen Sensor gespeichert, wobei deren Dimension an den zu überwachenden Gefahrenbereich bestmöglich angepasst wird.

Die Auswertung der mit dem optischen Sensor generierten Messdaten erfolgt im optischen Sensor. Hierzu ist im optischen Sensor eine Auswerteeinheit integriert, die die am Ausgang eines Empfängers der Sende-/Empfangseinheit anstehenden Empfangssignale auswertet. Dabei wird ein binäres Objektfeststellungsignal generiert, dessen Schaltzustände angeben, ob sich innerhalb des Schutzfeldes ein Objekt befindet.

Dieses Objektfeststellungsignal wird an eine Steuerung ausgegeben, die die Anlage steuert. Wird ein Objektfeststellungsignal ausgegeben, das signalisiert, dass kein Objekt im Schutzfeld vorhanden ist, wird der Betrieb der Anlage frei gegeben. Generiert der optische Sensor ein Objektfeststellungsignal mit dem Schaltzustand, der einer Objektdetektion im Schutzfeld entspricht, wird durch dieses Objektfeststellungsignal die Anlage mittels der Steuerung stillgesetzt, um Gefahrenzustände zu vermeiden.

Abhängig von der jeweiligen Applikation oder auch abhängig vom Betriebszustand der Anlage kann es erforderlich sein, die Gefahrenbereichsüberwachung anzupassen. Dies wird dadurch erreicht, dass im optischen Sensor unterschiedliche Schutzfelder abgespeichert sind, wobei je nach Anforderung das am besten geeignete Schutzfeld aktiviert wird.

Nachteilig hierbei ist, dass mit der begrenzten Anzahl an Schutzfeldern keine ausreichende Anpassung an sich ändernde Randbedingungen der Gefahrenbereichsüberwachung möglich ist.

Weiterhin nachteilig ist, dass einerseits ein hoher Aufwand erforderlich ist, geeignete Schutzfelder im optischen Sensor zu hinterlegen. Weiterhin ist auch ein unerwünscht hoher Aufwand erforderlich, um im Bedarfsfall geeignete Schutzfelder auszuwählen und zu aktivieren. Insbesondere ist der hierfür notwendige Programmieraufwand beträchtlich. Zudem können enge Timing-Anforderungen oft nicht eingehalten werden.

Die EP 3 640 521 A1 betrifft eine Überwachungsvorrichtung mit einem optischen Sensor, welcher eine Sende-/Empfangseinheit mit wenigstens einem Lichtstrahlen emittierenden Sender und wenigstens einem Lichtstrahlen empfangenden Empfänger aufweist, wobei die Lichtstrahlen innerhalb eines Überwachungsbereichs, insbesondere eines zwei- oder dreidimensionalen Überwachungsbereichs geführt sind. Dabei generierte Messwerte des optischen Sensors sind als sichere Telegramme einer Sicherheitssteuerung zugeführt. In der Sicherheitssteuerung erfolgt eine Auswertung der Messdaten zur Erzeugung eines Objektfeststellungsignals.

Problematisch hierbei ist, dass die hohen Datenraten der Daten, die vom Sicherheitssensor an die Sicherheitssteuerung zu übertragen sind, nicht in der gewünschten bzw. geforderten Zeit zu bewältigen sind. Zudem ist die Verarbeitung der Messdaten in der Sicherheitsteuerung unerwünscht aufwändig.

In der EP 3 611 422 A1 wird eine Sensoranordnung zum Absichern eines Überwachungsbereichs mit mindestens einer Gefahrenstelle zu einer Maschine angegeben, wobei die Sensoranordnung mindestens einen optoelektronischen Überwachungssensor zur Erfassung von Objekten in dem Überwachungsbereich wie eine Steuer- und Auswertungseinheit aufweist, die dafür ausgebildet ist, die Position erfasster Objekte mit der Gefahrenstelle zu vergleichen und im Falle einer gefährlichen Position eine sicherheitsgerichtete Reaktion der Maschine einzuleiten. Die Steuer- und Auswerteeinheit ist weiterhin dafür ausgebildet, zu einem erfassten Objekt eine weitere Gefahrenstelle zu erzeugen und zu überwachen.

Der Erfindung liegt die Aufgabe zugrunde, eine Überwachungsvorrichtung mit erhöhter Funktionalität bereitzustellen.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Überwachungsvorrichtung mit einem Sicherheitssensor, welcher zur Erfassung von Objekten in einem Überwachungsbereich ausgebildet ist. Der Sicherheitssensor weist Sensorkomponenten auf, welche Messdaten generieren. Der Sicherheitssensor weist eine Vorverarbeitungseinheit auf, in welcher aus den Messdaten sicherheitsrelevante Messdaten extrahiert werden. Nur die sicherheitsrelevanten Messdaten werden über eine sichere Schnittstelle an eine externe Einheit ausgegeben, wobei in der externen Einheit abhängig von den sicherheitsrelevanten Messdaten eine Sicherheitsfunktion generierbar ist. Anhand der Messdaten werden Objekte erfasst, wobei nur sicherheitskritische Objekte sicherheitsrelevante Messdaten bilden.

Der Grundgedanke der Erfindung besteht somit darin, mit der Vorverarbeitungseinheit im Sicherheitssensor eine Datenreduktion zu erzielen, indem aus Messdaten, die ein großes Datenvolumen ausbilden, sicherheitsrelevante Messdaten mit einem deutlich reduzierten Datenvolumen zu gewinnen.

Daraus ergibt sich als wesentlicher Vorteil, dass die reduzierten sicherheitsrelevanten Messdaten ohne Timing-Probleme über die sichere Schnittstelle vom Sicherheitssensor an die externe Einheit übertragen werden können.

Sichere Schnittstellen, die durch Prüfmaßnahmen, wie Absicherungen der Datenübertragung mittels Prüfcodes, wie Prüfsummen und dergleichen fehlersicher sind, fordern generell eine feste Struktur und Größe der pro Zeitintervall zu übertragenden Daten. Weiterhin ist es bei im Bereich der Sicherheitstechnik eingesetzten Überwachungsvorrichtungen erforderlich, dass die Zeitdauer der Datenübertragung fest vorgegeben und bekannt ist, da diese in die Reaktionszeit der Überwachungsvorrichtung zur Generierung der Sicherheitsfunktion mit eingerechnet wird.

Diese Anforderungen werden mit der erfindungsgemäßen Überwachungsvorrichtung erfüllt. Durch die mit der Vorverarbeitungseinheit durchgeführten Datenreduktion können die sicherheitsrelevanten Messdaten insbesondere mittels eines zyklischen Prozessabbilds übertragen werden, wobei generell die Zeitanforderungen für die fehlersichere Datenübertragung eingehalten werden können.

Vorteilhaft werden die sicherheitsrelevanten Messdaten in Echtzeit übertragen.

Dies bedeutet, insbesondere bei einer zyklischen Generierung von Messdaten, dass die Datenübertragung jeweils innerhalb des oder eines darauffolgenden Zyklus, innerhalb dessen die Messdaten generiert wurden, erfolgt. Dadurch werden auch die sicherheitsrelevanten Messdaten in diesem Zeitraster, über die sichere Schnittstelle übertragen, wodurch ein fester Zeitbezug zwischen der Messdatengenerierung und der Datenübertragung gegeben ist.

Besonders vorteilhaft wird die sichere Schnittstelle von einem sicheren Bussystem gebildet.

Dann werden die sicherheitsrelevanten Messdaten mittels eines sicheren Busprotokolls übertragen.

Das sichere Bussystem kann ein sicheres Feldbussystem, insbesondere ein sicheres Ethernet basiertes Feldbussystem, wie z.B. PROFIsafe, CIPSafety oder FSoE, sein.

Vorteilhaft ist der Sicherheitssensor ein optischer Sensor oder ein Radarsensor.

Insbesondere ist der Sicherheitssensor ein Flächendistanzsensor, d.h. ein scannender Distanzsensor. Der Distanzsensor umfasst einen Sendestrahlen emittierenden Sender und einen Empfänger, der die von einem zu detektierenden Objekt reflektierten Empfangsstahlen detektiert. Die Sendestrahlen werden periodisch, d.h. innerhalb aufeinanderfolgender Scans, innerhalb eines Erfassungsbereichs geführt, der vorteilhaft in einer Ebene liegt. Ein Scan bildet einen Zyklus der Messdaten-Erfassung.

Vorteilhaft sind in diesem Fall die sicherheitsrelevanten Messdaten von Positionen von Objekten gebildet.

Dabei liegen die Positionswerte in Form von mit dem Distanzsensor generierten Distanzwerten und zugehörigen Winkelwerten, die die aktuelle Ablenkposition der Sendestrahlen definieren, vor.

Besonders vorteilhaft dient die erfindungsgemäße Überwachungsvorrichtung zur Absicherung einer Maschine oder Anlage, von der Gefahren für Personen ausgehen können. Die externe Einheit ist dann eine Sicherheitssteuerung, die die Maschine oder Anlage steuert. Die Sicherheitssteuerung kann in Form einer fehlersicheren speicherprogrammierbaren Steuerung (SPS-Steuerung) ausgebildet sein.

Vorteilhaft generiert die Sicherheitssteuerung als Sicherheitsfunktion ein binäres Schaltsignal, wobei abhängig von den Schaltzuständen des Schaltsignals die Maschine oder Anlage eingeschaltet oder abgeschaltet ist.

Dabei wird die Maschine oder Anlage abgeschaltet, wenn in der Sicherheitssteuerung anhand der sicherheitsrelevanten Messdaten eine Gefahrensituation erkannt wird.

Ein Vorteil der erfindungsgemäßen Überwachungsvorrichtung besteht darin, dass mit den sicherheitsrelevanten Messdaten nur eine begrenzte Datenmenge der Sicherheitssteuerung zugeführt wird. Da zudem im Sicherheitssensor mit der Vorverarbeitungseinheit eine Vorverarbeitung der übertragenen sicherheitsrelevanten Messdaten stattgefunden hat, ist der Rechenaufwand in der Sicherheitssteuerung begrenzt. Dies ist insbesondere deshalb vorteilhaft, da Sicherheitssteuerungen, wie sichere SPS-Steuerungen, nur eine begrenzte Rechenkapazität aufweisen.

Gemäß einer vorteilhaften Ausführungsform erfolgt in der Vorverarbeitungseinheit des Sicherheitssensors eine Datenreduktion derart, dass sicherheitsrelevante Messdaten durch eine Selektion von Messdaten erhalten werden.

Aus der Gesamtheit der Messdaten werden dabei als sicherheitsrelevante Messdaten nur die Daten ausgewählt, die zu einer Generierung der Sicherheitsfunktion, insbesondere einem Abschalten der Maschine oder Anlage führen können.

Insbesondere erfolgt hierzu in der Vorverarbeitungseinheit eine Bestimmung der Breite von den detektierten Objekten. Objekte die aufgrund der Breite keine Person darstellen können, z.B. kleine Objekte wie Fliegen, Vögel oder Staub, werden als nicht sicherheitskritische Objekte klassifiziert und somit deren Position auch nicht an die Sicherheitssteuerung übertragen.

Zusätzlich kann in der Vorverarbeitungseinheit eine Klassifikation von detektierten Objekten erfolgen, wobei zweckmäßig zwischen sicherheitskritischen Objekten, wie z.B. Personen, die Gefährdungen ausgesetzt sind, und nicht sicherheitskritischen Objekten, wie z. B. Transportgüter, die nicht zu Gefahrensituationen führen, unterschieden wird.

Dabei können derartige sicherheitskritische Objekte und nicht sicherheitskritische Objekte durch Erfassung der Größe oder Kontur erfasst werden, wobei auch die sicherheitskritischen Objekte und nicht sicherheitskritischen Objekte in Einlernvorgängen erfasst werden können. Zusätzlich können auch weitere Parameter, wie die Position, zeitliche Verweildauer, Geschwindigkeit und Bewegungsrichtung von Objekten bestimmt werden. Generell kann eine Objektverfolgung von Objekten durchgeführt werden, insbesondere unter dem Aspekt, ob sich Objekte kritischen, gefahrbringenden Bereichen der Maschine oder Anlage nähern.

Somit können anhand der Messdaten Objekte erfasst werden, wobei nur sicherheitskritische Objekte sicherheitsrelevante Messdaten bilden. Dies bedeutet, dass nicht sicherheitskritische Objekte unterdrückt werden, also nicht als sicherheitsrelevante Messdaten berücksichtigt werden.

Insbesondere sind sicherheitsrelevante Messdaten von Positionen von sicherheitskritischen Objekten gebildet.

Dabei können die Positionen von Objekten in kartesischen Koordinaten oder Polarkoordinaten vorliegen.

Generell kann in der Vorverarbeitungseinheit des Sicherheitssensors auch eine Datenreduktion derart durchgeführt werden, dass sicherheitsrelevante Messdaten durch eine Komprimierung von Messdaten gewonnen werden.

Dabei können sicherheitsrelevante Messdaten in Tabellenform generiert werden.

Ist der Sicherheitssensor beispielsweise als Flächendistanzsensor ausgebildet, liegen Positionswerte in Form von Paaren von Distanzwerten und Winkelwerten vor. Die sicherheitsrelevanten Messdaten sind dann von derartigen Paaren von Distanzwerten und Winkelwerten gebildet, die für relevante sicherheitskritische Objekt erhalten werden.

Weiterhin kann in der Vorverarbeitungseinheit des Sicherheitssensors eine Datenreduktion derart durchgeführt werden, dass sicherheitsrelevante Messdaten durch eine Filterung von Messdaten gewonnen werden.

Bei einem Sicherheitssensor in Form eines Flächendistanzsensors wird der Erfassungsbereich von den Sendestrahlen des Senders periodisch überstrichen. Dabei wird in kleinen Winkelsegmenten, die typisch kleiner als 10° sind, jeweils ein Distanzwert ermittelt.

Durch Vorgabe einer größeren Winkelauflösung und entsprechend auch einer größeren Entfernungsauflösung kann die Auswahl der Messdaten erheblich reduziert werden.

Vorteilhaft liegt die Winkelauflösung im Bereich 1° bis 20°, und die Entfernungsauflösung im Bereich 10 mm bis 400 mm.

Generell ist es auch möglich, dass der Überwachungsbereich, innerhalb dessen der Sicherheitssensor Objekte erfasst werden, einstellbar ist.

In diesem Fall kann die Winkelauflösung und/oder die Entfernungsauflösung an den Überwachungsbereich anpassbar sein.

Die Filterung von Messdaten kann dadurch optimiert und an unterschiedliche Applikationen angepasst werden, dass parametrierbare Filterkriterien vorhanden sind.

Beispielsweise ist ein parametrierbarer Filterparameter von einer Objektauflösung gebildet.

Weiterhin kann bei einem als Flächendistanzsensor ausgebildeten Sicherheitssensor eine Scananzahl des Flächendistanzsensors einen parametrierbaren Filterparameter bilden.

Die Erfindung wird im Folgenden anhand der Zeichnungen erläutert. Es zeigen:
- Figur 1:: Schematische Darstellung eines Ausführungsbeispiels der erfindungsgemäßen Überwachungsvorrichtung.
- Figur 2:: Erstes Ausführungsbeispiel eines Sicherheitssensors für die Überwachungsvorrichtung gemäß Figur 1.
- Figur 3:: Zweites Ausführungsbeispiel eines Sicherheitssensors für die Überwachungsvorrichtung gemäß Figur 1.
- Figur 4:: Schematische Darstellung des Erfassungsbereichs des Sicherheitssensors gemäß den Figuren 2 oder 3.
- Figur 5:: Ablaufschema einer Messdatenverarbeitung in einer Vorverarbeitungseinheit der erfindungsgemäßen Überwachungseinheit.

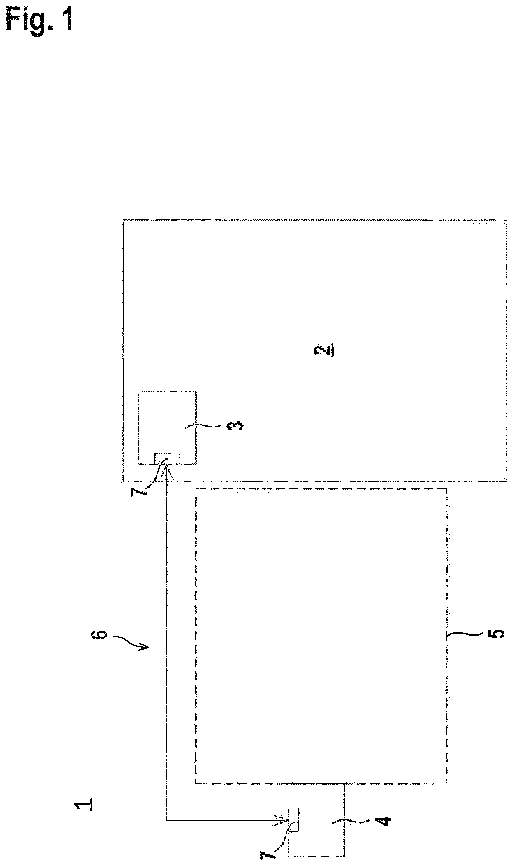

Figur 1 zeigt schematisch ein Ausführungsbeispiel der erfindungsgemäßen Überwachungsvorrichtung 1. Die Überwachungsvorrichtung 1 wird im vorliegenden Fall im Bereich der Sicherheitstechnik eingesetzt. Dabei wird mit der Überwachungsvorrichtung 1 eine Anlage 2 überwacht. Die Anlage 2 kann auch eine Maschine sein. Die Anlage 2 wird mit einer Sicherheitssteuerung 3 gesteuert. Zur Erfüllung der sicherheitstechnischen Anforderungen weist die Sicherheitssteuerung 3 einen fehlersicheren Aufbau auf.

Zur Überwachung der Anlage 2 weist die Überwachungsvorrichtung 1 einen Sicherheitssensor 4 auf, mit dem ein Überwachungsbereich 5 überwacht wird. Der Sicherheitssensor 4 ist so positioniert, dass dieser Überwachungsbereich 5 einen Gefahrenbereich an der Anlage 2 umfasst.

Der Sicherheitssensor 4 und die Sicherheitssteuerung 3 sind über eine sichere Schnittstelle verbunden, die im vorliegenden Fall von einem sicheren Bussystem 6 gebildet wird. Zum Anschluss an das sichere Bussystem 6 weist sowohl der Sicherheitssensor 4 als auch die Sicherheitssteuerung 3 ein entsprechendes Schnittstellenmodul 7 auf.

Abhängig von Sensorsignalen des Sicherheitssensors 4 generiert die Sicherheitssteuerung 3 als Sicherheitsfunktion ein binäres Schaltsignal. Abhängig von den Schaltzuständen des Schaltsignals ist die Maschine oder Anlage 2 eingeschaltet oder abgeschaltet.

Dabei wird die Anlage 2 abgeschaltet, wenn in der Vorverarbeitungseinheit anhand der sicherheitsrelevanten Messdaten eine Gefahrensituation erkannt wird.

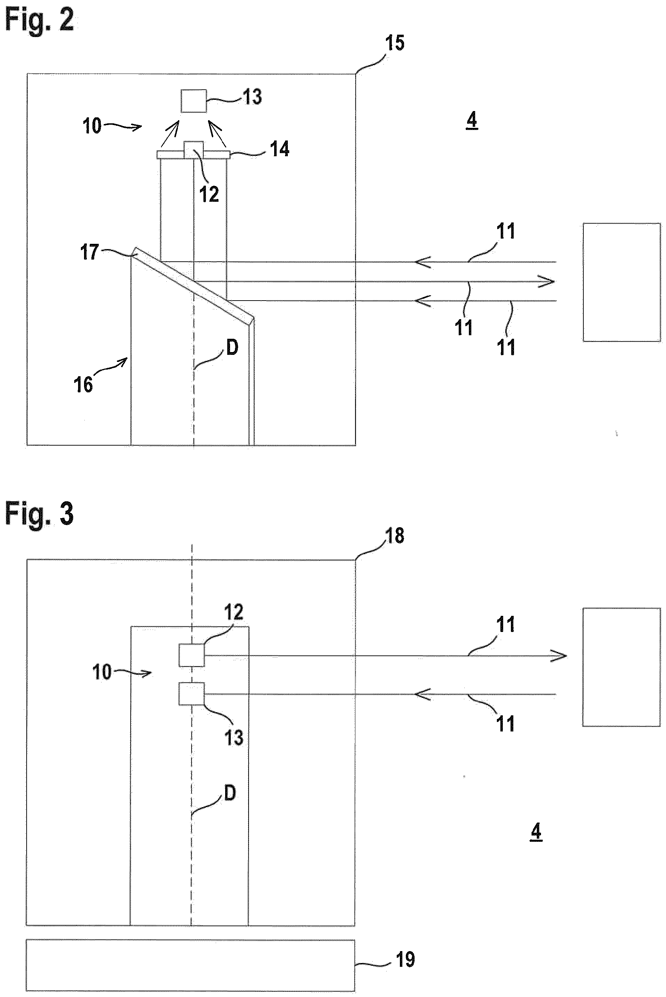

Figur 2 zeigt ein erstes Ausführungsbeispiel des Sicherheitssensors 4 in Form eines optischen Sensors, der im vorliegenden Fall in Form eines Flächendistanzsensors ausgebildet ist.

Der optische Sensor weist eine Sende-/Empfangseinheit 10 mit einem Lichtstrahlen 11 emittierenden Sender 12 und einem Lichtstrahlen 11 empfangenden Empfänger 13 auf. Der Sender 12 ist zum Beispiel von einer Laserdiode gebildet, der Empfänger 13 ist zum Beispiel von einer Photodiode gebildet. Dem Empfänger 13 ist eine Empfangsoptik 14 zugeordnet. Die Sende-/Empfangseinheit 10 ist stationär in einem Gehäuse 15 integriert.

Ebenfalls im Gehäuse 15 ist eine Ablenkeinheit 16 vorgesehen, die einen motorisch getriebenen, um eine Drehachse D drehbaren Umlenkspiegel 17 aufweist. Die vom Sender 12 emittierten Lichtstrahlen 11 und die von einem zu detektierenden Objekt zurückreflektierten Lichtstrahlen 11 werden über den Umlenkspiegel 17 geführt. Durch die Drehbewegung des Umlenkspiegels 17 werden die Lichtstrahlen 11 periodisch im Überwachungsbereich 5 geführt. Mittels eines Winkelgebers wird die aktuelle Drehstellung des Umlenkspiegels 17 und somit die aktuelle Strahlenrichtung der Lichtstrahlen 11 erfasst.

Im vorliegenden Fall bildet die Sende-/Empfangseinheit 10 einen nach einem Puls-Laufzeit-Verfahren arbeitenden Distanzsensor.

Figur 3 zeigt eine zweite Ausführungsform des optischen Sensors 5. In diesem Fall ist eine Sende-/Empfangseinheit 10 mit einem Lichtstrahlen 11 emittierenden Sender 12 und einem Lichtstrahlen 11 empfangenden Empfänger 13 in einem rotierenden Messkopf 18 angeordnet. Der um eine Drehachse D drehbare, und auf einem feststehenden Sockel 19 gelagerte Messkopf 18 bewirkt in diesem Fall die periodische Ablenkung der Lichtstrahlen 11 im Überwachungsbereich 5. Ansonsten entspricht der optische Sensor 5 gemäß Figur 3 der Ausführungsform gemäß Figur 2.

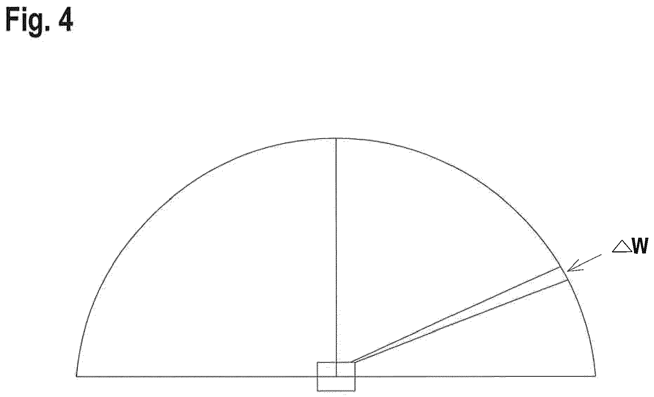

Figur 4 zeigt schematisch den mit dem Sicherheitssensor 4 gemäß Figur 2 bzw. Figur 3 erfassten Erfassungsbereich. Der Erfassungsbereich verläuft in einer Ebene. Entsprechend der Reichweite des Senders 12 des Sicherheitssensors 4 ist der Erfassungsbereich halbkreisförmig. In vorgegebenen Winkelsegmenten Δw, die typischerweise kleiner als 1° sind, wird vorteilhaft jeweils ein Distanzwert ermittelt.

Erfindungsgemäß weist der Sicherheitssensor 4 eine Auswerteeinheit mit einer Vorverarbeitungseinheit auf, in der eine Vorverarbeitung von Messdaten erfolgt. Mit dem Sicherheitssensor 4, insbesondere dem Flächendistanzsensor gemäß den Figuren 2 oder 3, werden Positionen von Objekten bestimmt, die in Form von Distanzwerten und Winkelwerten vorliegen.

In der Vorverarbeitungseinheit des Sicherheitssensors 4 erfolgt eine Datenreduktion derart, dass aus den Messdaten sicherheitsrelevante Messdaten gewonnen werden. Dabei werden aus den Messdaten nur diejenigen als sicherheitsrelevante Messdaten übernommen, die zur Auslösung einer Sicherheitsfunktion, insbesondere einem Abschalten der Anlage 2, führen können.

Zunächst wird in der Vorverarbeitungseinheit geprüft, ob die ermittelten Positionen von Objekten überhaupt innerhalb des Überwachungsbereichs 5 liegen.

Nur für diese Messdaten erfolgt eine Datenreduktion.

Beispielsweise werden sicherheitsrelevante Messdaten durch eine Selektion von Messdaten erhalten.

Es werden anhand der Messdaten Objekte erfasst, wobei nur sicherheitskritische Objekte sicherheitsrelevante Messdaten bilden.

Dabei sind sicherheitsrelevante Messdaten von Positionen von sicherheitskritischen Objekten gebildet. Dabei sind sicherheitskritische Objekte diejenigen Objekte, bei denen es sich um Personen handeln könnte.

Weiterhin können sicherheitsrelevante Messdaten durch eine Komprimierung oder Filterung gewonnen werden.

Für die Filterung der Messdaten können generell parametrierbare Filterkriterien vorgesehen sein. Dabei können parametrierbare Filterparameter, wie z.B. eine parametrierbare Objektauflösung oder eine parametrierbare Scananzahl des Flächendistanzsensors, eingesetzt werden. Die Scananzahl gibt an, wie viele Scans für eine Objekterkennung nötig sind.

Auch kann der mit dem Sicherheitssensor 4 überwachte Überwachungsbereich 5 einstellbar sein, wobei dann die Objektauflösung insbesondere die Winkelauflösung und/oder Entfernungsauflösung, an den Überwachungsbereich 5 angepasst werden kann.

Insbesondere wird eine Komprimierung und Filterung von Messdaten durch Vorgabe einer Entfernungsauflösung und/oder Winkelauflösung von Positionswerten erhalten.

Zweckmäßig liegt die Winkelauflösung im Bereich 1° bis 20°. Die Entfernungsauflösung liegt im Bereich 10 mm bis 400 mm.

Damit werden Messdaten aus mehreren Winkelsegmenten Δw (Figur 4) entsprechend der vorgegebenen Winkelauflösung zusammengefasst.

Bei den Distanzwerten kann beispielweise eine Komprimierung derart erfolgen, dass die Genauigkeit der Distanz verringert wird.

Dies wird im Folgenden anhand eines konkreten Zahlenbeispiels näher erläutert.

Typischerweise kann ein Flächendistanzsensor einen Messbereich von 270° aufweisen, d.h. die Lichtstrahlen des Flächendistanzsensors werden innerhalb aufeinanderfolgender Scans periodisch innerhalb eines Winkelbereichs W = 270° geführt. Die Winkelauflösung bei der Generierung von Messwerten beträgt typisch 0,1°. Damit führt der Flächendistanzsensor pro Scan 2.700 Messungen durch. Wenn die Messwerte als 16-Bit-Werte ausgegeben werden sind dafür 5.400 Byte notwendig. Diese Datenmenge kann über die sichere Schnittstelle nicht in der erforderlichen Zeit übertragen werden.

Erfindungsgemäß wird daher für eine Datenreduktion die Winkelauflösung auf einen höheren Wert festgelegt, beispielsweise 5°. Dann kann der Messbereich des Flächendistanzsensors in 54 Datensätzen abgebildet werden. Gibt man zudem die Objektentfernung in einer Auflösung von 30 mm - 50 mm an, kann die Objektentfernung mit 1 Byte repräsentiert werden. Damit ergibt sich für dieses Beispiel eine Größe der zyklischen Prozessdaten von 54 Byte, die ohne Einschränkung über ein sicheres Feldbusprotokoll übertragen werden können. Zusätzlich besitzt die Objektposition in der Prozessdaten eine genaue räumliche Auflösung, die mit der simultanen Überwachung mehrerer Schutzfelder nicht möglich ist. Beispielsweise bei einer Winkelauflösung von 5° und einer Entfernungsauflösung von 50 mm kann man den Überwachungsbereich eines Flächendistanzsensors mit einem Messbereich von 270° und einer maximalen sicheren Messentfernung von 8,25 m in insgesamt 7.290 Segmente unterteilen. Die Prozessdaten enthalten in diesem Beispiel für jedes 5°-Winkelsegment die Entfernung des nächsten Objekts mit einer Auflösung von 50 mm. Reduziert man die Auflösung auf 33 mm, dann erhält man 13.250 einzelne Segmente.

Die so aus den Messdaten gewonnenen sicherheitsrelevanten Messdaten liegen in Form von Positionswerten von sicherheitskritischen Objekten vor, die in eine Tabelle eingetragen werden.

Diese sicherheitsrelevanten Messdaten werden über das sichere Bussystem 6 an die Sicherheitssteuerung 3 übertragen. Die sicherheitsrelevanten Messdaten werden dabei mittels eines zyklischen Prozessabbilds, bzw. in Echtzeit an die Sicherheitssteuerung 3 übertragen.

In der Sicherheitssteuerung 3 erfolgt eine Auswertung der sicherheitsrelevanten Messdaten zur Generierung einer Sicherheitsfunktion für die überwachte Anlage 2. Im vorliegenden Fall generiert die Sicherheitssteuerung 3 als Sicherheitsfunktion ein binäres Schaltsignal, dessen Schaltzustände angeben, ob eine Gefahrensituation vorliegt oder nicht. Das Schaltsignal wird über einen sicheren Schaltausgang an die Anlage 2 ausgegeben. Liegt keine Gefahrensituation vor, wird mit dem Schaltsignal der Betrieb der Anlage 2 freigegeben. Liegt eine Gefahrensituation vor, wird die Anlage 2 mit dem Schaltsignal abgeschaltet.

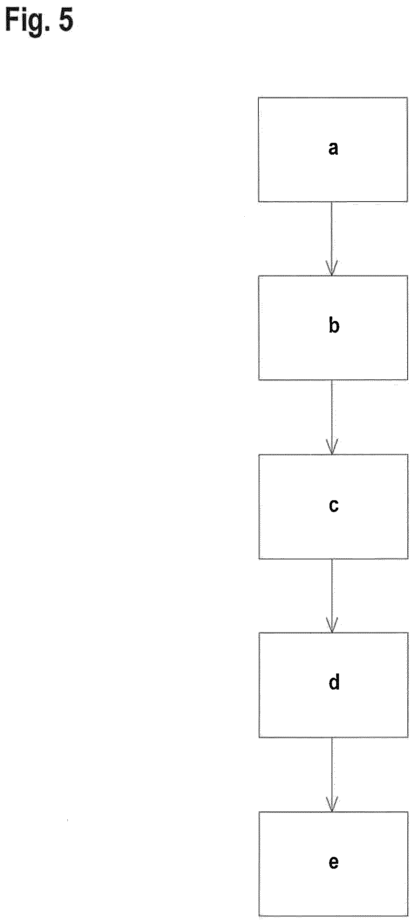

Figur 5 zeigt ein Beispiel eines Ablaufschemas für die Vorverarbeitungseinheit der erfindungsgemäßen Überwachungseinrichtung.

Zunächst führt der Sicherheitssensor, insbesondere der Flächendistanzsensor Messungen durch, die jeweils innerhalb eines Zyklus, insbesondere eines Scans durchgeführt werden. Die entsprechenden Messdaten (Schritt a in Figur 5) werden der Vorverarbeitungseinheit zugeführt. Dort wird zunächst geprüft, ob die gemessenen Entfernungen bzw. Positionen innerhalb des Überwachungsbereichs liegen (Schritt b in Figur 5). Danach erfolgt eine Filterung der Messdaten (Schritt c in Figur 5). Danach erfolgt in der Vorverarbeitungseinheit die Bestimmung von Positionen relevanter Objekte (Schritt d in Figur 5). Schließlich erfolgt die Eintragung der Objektpositionen in die Tabelle der zyklischen Prozessdaten (Schritt e in Figur 5). Diese Tabelle wird zyklisch und damit in Echtzeit an die Sicherheitssteuerung übertragen.

### Bezugszeichenliste

- (1): Überwachungsvorrichtung
- (2): Anlage
- (3): Sicherheitssteuerung
- (4): Sicherheitssensor
- (5): Überwachungsbereich
- (6): Bussystem
- (7): Schnittstellenmodul
- (10): Sende-/Empfangseinheit
- (11): Lichtstrahl
- (12): Sender
- (13): Empfänger
- (14): Empfangsoptik
- (15): Gehäuse
- (16): Ablenkeinheit
- (17): Umlenkspiegel
- (18): Messkopf
- (19): Sockel

- (D): Drehachse

## Patentansprüche

1. Überwachungsvorrichtung (1) mit einem Sicherheitssensor (4), welcher zur Erfassung von Objekten in einem Überwachungsbereich (5) ausgebildet ist, wobei der Sicherheitssensor (4) Sensorkomponenten aufweist, welche Messdaten generieren, wobei der Sicherheitssensor (4) eine Vorverarbeitungseinheit aufweist, in welcher aus den Messdaten sicherheitsrelevante Messdaten extrahiert werden, wobei nur die sicherheitsrelevanten Messdaten über eine sichere Schnittstelle an eine externe Einheit ausgegeben werden, wobei in der externen Einheit abhängig von den sicherheitsrelevanten Messdaten eine Sicherheitsfunktion generierbar ist, **dadurch gekennzeichnet, dass** anhand der Messdaten Objekte erfasst werden, wobei nur sicherheitskritische Objekte sicherheitsrelevante Messdaten bilden.

2. Überwachungsvorrichtung (1) nach Anspruch 1, **dadurch gekennzeichnet, dass** der Sicherheitssensor (4) ein optischer Sensor oder ein Radarsensor ist.

3. Überwachungsvorrichtung (1) nach einem der Ansprüche 1 oder 2, **dadurch gekennzeichnet, dass** der Sicherheitssensor (4) ein Flächendistanzsensor ist.

4. Überwachungsvorrichtung (1) nach einem der Ansprüche 1 bis 3, **dadurch gekennzeichnet, dass** die sicherheitsrelevanten Messdaten von Positionen von Objekten gebildet sind, wobei die sicherheitsrelevanten Messdaten Positionswerte insbesondere in Form von Distanzwerten und Winkelwerten enthalten.

5. Überwachungsvorrichtung (1) nach einem der Ansprüche 1 bis 4, **dadurch gekennzeichnet, dass** die externe Einheit eine Sicherheitssteuerung (3) ist, die eine Maschine oder Anlage (2) steuert.

6. Überwachungsvorrichtung (1) nach Anspruch 5, **dadurch gekennzeichnet, dass** die Sicherheitssteuerung (3) als Sicherheitsfunktion ein binäres Schaltsignal generiert, wobei abhängig von den Schaltzuständen des Schaltsignals die Maschine oder Anlage (2) eingeschaltet oder abgeschaltet ist.

7. Überwachungsvorrichtung (1) nach Anspruch 6, **dadurch gekennzeichnet, dass** die Maschine oder Anlage (2) abgeschaltet wird, wenn in der Vorverarbeitungseinheit anhand der sicherheitsrelevanten Messdaten eine Gefahrensituation erkannt wird.

8. Überwachungsvorrichtung (1) nach einem der Ansprüche 1 bis 7, **dadurch gekennzeichnet, dass** sicherheitsrelevante Messdaten durch eine Selektion von Messdaten erhalten werden.

9. Überwachungsvorrichtung (1) nach einem der Ansprüche 1 bis 8, **dadurch gekennzeichnet, dass** sicherheitsrelevante Messdaten von Positionen von sicherheitskritischen Objekten gebildet sind, wobei die Positionen von Objekten in kartesischen Koordinaten oder Polarkoordinaten vorliegen.

10. Überwachungsvorrichtung (1) nach einem der Ansprüche 1 bis 9, **dadurch gekennzeichnet, dass** sicherheitsrelevante Messdaten durch eine Filterung und/oder Komprimierung von Messdaten gewonnen werden.

11. Überwachungsvorrichtung (1) nach Anspruch 10, **dadurch gekennzeichnet, dass** sicherheitsrelevante Messdaten in Tabellenform generiert werden.

12. Überwachungsvorrichtung (1) nach einem der Ansprüche 10 oder 11, **dadurch gekennzeichnet, dass** eine Komprimierung und Filterung von Messdaten durch Vorgabe einer Entfernungsauflösung und/oder Winkelauflösung von Positionswerten erhalten wird.

13. Überwachungsvorrichtung (1) nach Anspruch 12, **dadurch gekennzeichnet, dass** die Winkelauflösung im Bereich 1° bis 20° liegt, und dass die Entfernungsauflösung im Bereich 10 mm bis 400 mm liegt.

14. Überwachungsvorrichtung (1) nach einem der Ansprüche 1 bis 13, **dadurch gekennzeichnet, dass** der Überwachungsbereich (5), innerhalb dessen der Sicherheitssensor (4) Objekte erfasst, einstellbar ist.

15. Überwachungsvorrichtung (1) nach einem der Ansprüche 13 und 14, **dadurch gekennzeichnet, dass** die Winkelauflösung und/oder die Entfernungsauflösung an den Überwachungsbereich (5) anpassbar ist.

16. Überwachungsvorrichtung (1) nach einem der Ansprüche 10 bis 15, **dadurch gekennzeichnet, dass** parametrierbare Filterkriterien vorhanden sind.

17. Überwachungsvorrichtung (1) nach Anspruch 16, **dadurch gekennzeichnet, dass** ein parametrierbarer Filterparameter von einer Objektauflösung gebildet ist.

18. Überwachungsvorrichtung (1) nach einem der Ansprüche 3 bis 17, **dadurch gekennzeichnet, dass** bei einem als Flächendistanzsensor ausgebildeten Sicherheitssensor (4) eine Scananzahl des Flächendistanzsensors einen parametrierbaren Filterparameter bildet.

19. Überwachungsvorrichtung (1) nach einem der Ansprüche 1 bis 18, **dadurch gekennzeichnet, dass** die sicherheitsrelevanten Messdaten mittels eines zyklischen Prozessabbilds der sicheren Schnittstelle übertragen werden, und/oder dass die sicherheitsrelevanten Messdaten in Echtzeit übertragen werden.

20. Überwachungsvorrichtung (1) nach einem der Ansprüche 1 bis 19, **dadurch gekennzeichnet, dass** die sichere Schnittstelle von einem sicheren Bussystem (6) gebildet ist, wobei die sicherheitsrelevanten Messdaten mittels eines sicheren Busprotokolls übertragen werden.

## Claims

1. A monitoring device (1) comprising a safety sensor (4) which is designed to detect objects in a monitoring area (5), wherein the safety sensor (4) comprises sensor components which generate measurement data, wherein the safety sensor (4) comprises a pre-processing unit in which safety-relevant measurement data is extracted from the measurement data, wherein only the safety-relevant measurement data is output to an external unit via a secure interface, wherein a safety function can be generated in the external unit depending on the safety-relevant measurement data, **characterised in that** objects are detected on the basis of the measurement data, wherein only safety-critical objects form safety-relevant measurement data.

2. Monitoring device (1) according to claim 1, **characterised in that** the safety sensor (4) is an optical sensor or a radar sensor.

3. Monitoring device (1) according to one of claims 1 or 2, **characterised in that** the safety sensor (4) is a range sensor.

4. Monitoring device (1) according to one of claims 1 to 3, **characterised in that** the safety-relevant measurement data are formed from positions of objects, wherein the safety-relevant measurement data contain position values, in particular in the form of distance values and angle values.

5. Monitoring device (1) according to one of claims 1 to 4, **characterised in that** the external unit is a safety controller (3) which controls a machine or system (2).

6. Monitoring device (1) according to claim 5, **characterised in that** the safety controller (3) generates a binary switching signal as a safety function, wherein the machine or system (2) is switched on or off depending on the switching states of the switching signal.

7. Monitoring device (1) according to claim 6, **characterised in that** the machine or plant (2) is switched off if a hazardous situation is detected in the pre-processing unit on the basis of the safety-relevant measurement data.

8. Monitoring device (1) according to any one of claims 1 to 7, **characterised in that** safety-relevant measurement data is obtained by a selection of measurement data.

9. Monitoring device (1) according to any one of claims 1 to 8, **characterised in that** safety-relevant measurement data is formed from the positions of safety-critical objects, wherein the positions of objects are given in Cartesian coordinates or polar coordinates.

10. Monitoring device (1) according to any one of claims 1 to 9, **characterised in that** safety-relevant measurement data is obtained by filtering and/or compressing measurement data.

11. Monitoring device (1) according to claim 10, **characterised in that** safety-relevant measurement data is generated in tabular form.

12. Monitoring device (1) according to one of claims 10 or 11, **characterised in that** compression and filtering of measurement data is achieved by specifying a distance resolution and/or angular resolution of position values.

13. Monitoring device (1) according to claim 12, **characterised in that** the angular resolution lies in the range of 1° to 20°, and that the distance resolution lies in the range of 10 mm to 400 mm.

14. Monitoring device (1) according to any one of claims 1 to 13, **characterised in that** the monitoring range (5) within which the safety sensor (4) detects objects is adjustable.

15. Monitoring device (1) according to one of claims 13 and 14, **characterised in that** the angular resolution and/or the distance resolution is adaptable to the monitoring range (5).

16. Monitoring device (1) according to one of claims 10 to 15, **characterised in that** configurable filter criteria are provided.

17. Monitoring device (1) according to claim 16, **characterised in that** a configurable filter parameter is formed from an object resolution.

18. Monitoring device (1) according to any one of claims 3 to 17, **characterised in that**, in the case of a safety sensor (4) designed as a surface distance sensor, a scan count of the surface distance sensor forms a configurable filter parameter.

19. Monitoring device (1) according to any one of claims 1 to 18, **characterised in that** the safety-relevant measurement data is transmitted by means of a cyclic process image of the safe interface, and/or that the safety-relevant measurement data is transmitted in real time.

20. Monitoring device (1) according to any one of claims 1 to 19, **characterised in that** the safe interface is formed by a safe bus system (6), wherein the safety-relevant measurement data is transmitted by means of a safe bus protocol.

## Revendications

1. Dispositif de surveillance (1) comprenant un capteur de sécurité (4) qui
est conçu pour détecter des objets dans une zone de surveillance (5), le capteur de sécurité (4) comportant des composants de capteur qui génèrent des données de mesure, le capteur de sécurité (4) comportant une unité de prétraitement dans laquelle des données de mesure pertinentes pour la sécurité sont extraites des données de mesure, seules les données de mesure pertinentes pour la sécurité étant transmises à une unité externe via une interface sécurisée, une fonction de sécurité pouvant être générée dans l'unité externe en fonction des données de mesure pertinentes pour la sécurité,
**caractérisé en ce que** des objets sont détectés à l'aide des données de mesure, seuls les objets critiques pour la sécurité générant des données de mesure pertinentes pour la sécurité.

2. Dispositif de surveillance (1) selon la revendication 1, **caractérisé en ce que** le capteur de sécurité (4) est un capteur optique ou un capteur radar.

3. Dispositif de surveillance (1) selon l'une des revendications 1 ou 2, **caractérisé en ce que** le capteur de sécurité (4) est un capteur de distance à surface.

4. Dispositif de surveillance (1) selon l'une des revendications 1 à 3, **caractérisé en ce que** les données de mesure pertinentes pour la sécurité sont constituées de positions d'objets, les données de mesure pertinentes pour la sécurité contenant des valeurs de position, notamment sous forme de valeurs de distance et de valeurs angulaires.

5. Dispositif de surveillance (1) selon l'une des revendications 1 à 4, **caractérisé en ce que** l'unité externe est une commande de sécurité (3) qui commande une machine ou une installation (2).

6. Dispositif de surveillance (1) selon la revendication 5, **caractérisé en ce que** la commande de sécurité (3) génère, en tant que fonction de sécurité, un signal de commutation binaire, la machine ou l'installation (2) étant mise en marche ou arrêtée en fonction des états de commutation du signal de commutation.

7. Dispositif de surveillance (1) selon la revendication 6, **caractérisé en ce que** la machine ou l'installation (2) est mise hors tension lorsqu'une situation dangereuse est détectée dans l'unité de prétraitement à partir des données de mesure relatives à la sécurité.

8. Dispositif de surveillance (1) selon l'une des revendications 1 à 7, **caractérisé en ce que** les données de mesure pertinentes pour la sécurité sont obtenues par une sélection de données de mesure.

9. Dispositif de surveillance (1) selon l'une des revendications 1 à 8, **caractérisé en ce que** les données de mesure pertinentes pour la sécurité sont constituées des positions d'objets critiques pour la sécurité, les positions des objets étant exprimées en coordonnées cartésiennes ou polaires.

10. Dispositif de surveillance (1) selon l'une des revendications 1 à 9, **caractérisé en ce que** les données de mesure pertinentes pour la sécurité sont obtenues par un filtrage et/ou une compression des données de mesure.

11. Dispositif de surveillance (1) selon la revendication 10, **caractérisé en ce que** les données de mesure pertinentes pour la sécurité sont générées sous forme de tableau.

12. Dispositif de surveillance (1) selon l'une des revendications 10 ou 11, **caractérisé en ce qu'**une compression et un filtrage des données de mesure sont obtenus par la spécification d'une résolution de distance et/ou d'une résolution angulaire des valeurs de position.

13. Dispositif de surveillance (1) selon la revendication 12, **caractérisé en ce que** la résolution angulaire est comprise entre 1° et 20°, et **en ce que** la résolution de distance est comprise entre 10 mm et 400 mm.

14. Dispositif de surveillance (1) selon l'une des revendications 1 à 13, **caractérisé en ce que** la zone de surveillance (5) à l'intérieur de laquelle le capteur de sécurité (4) détecte des objets est réglable.

15. Dispositif de surveillance (1) selon l'une des revendications 13 et 14, **caractérisé en ce que** la résolution angulaire et/ou la résolution de distance est adaptable à la zone de surveillance (5).

16. Dispositif de surveillance (1) selon l'une des revendications 10 à 15, **caractérisé en ce qu'**il comporte des critères de filtrage paramétrables.

17. Dispositif de surveillance (1) selon la revendication 16, **caractérisé en ce qu'**un paramètre de filtrage paramétrable est constitué d'une résolution d'objet.

18. Dispositif de surveillance (1) selon l'une des revendications 3 à 17, **caractérisé en ce que**, dans le cas d'un capteur de sécurité (4) conçu comme un capteur de distance à surface, un nombre de balayages du capteur de distance à surface constitue un paramètre de filtrage paramétrable.

19. Dispositif de surveillance (1) selon l'une des revendications 1 à 18, **caractérisé en ce que** les données de mesure relatives à la sécurité sont transmises au moyen d'une image de processus cyclique de l'interface de sécurité, et/ou **en ce que** les données de mesure relatives à la sécurité sont transmises en temps réel.

20. Dispositif de surveillance (1) selon l'une des revendications 1 à 19, **caractérisé en ce que** l'interface de sécurité est constituée d'un système de bus de sécurité (6), les données de mesure relatives à la sécurité étant transmises au moyen d'un protocole de bus de sécurité.
